(19) **Europäisches Patentamt / European Patent Office / Office européen des brevets**

(11) **EP 4 123 055 B1**

(12) **EUROPEAN PATENT SPECIFICATION**

(45) Date of publication and mention
of the grant of the patent:
**08.01.2025 Bulletin 2025/02**

(21) Application number: **22159737.0**

(22) Date of filing: **02.03.2022**

(51) International Patent Classification (IPC):
**C25B 1/04** *(2021.01)* **C25B 1/50** *(2021.01)*
**C25B 9/19** *(2021.01)* **C25B 15/021** *(2021.01)*
**C25B 15/027** *(2021.01)* **C25B 15/08** *(2006.01)*
**C25B 1/55** *(2021.01)* **C25B 3/21** *(2021.01)*
**C25B 11/049** *(2021.01)* **C25B 15/02** *(2021.01)*

(52) Cooperative Patent Classification (CPC):
**C25B 15/08; C25B 1/04; C25B 1/50; C25B 1/55;
C25B 3/21; C25B 9/19; C25B 11/049; C25B 15/02;
C25B 15/027; C25B 15/085;** Y02E 60/36

(54) **PHOTOCHEMICAL REACTION SYSTEM AND PHOTOCHEMICAL REACTION METHOD**

FOTOCHEMISCHES REAKTIONSSYSTEM UND FOTOCHEMISCHES REAKTIONSVERFAHREN

SYSTÈME DE RÉACTION PHOTOCHIMIQUE ET PROCÉDÉ DE RÉACTION PHOTOCHIMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2021 JP 2021120450**

(43) Date of publication of application:
**25.01.2023 Bulletin 2023/04**

(73) Proprietor: **Hitachi, Ltd.
Tokyo 100-8280 (JP)**

(72) Inventors:
• **TAKAMATSU, Daikoh
Tokyo, 100-8280 (JP)**

• **YABUUCHI, Shin
Tokyo, 100-8280 (JP)**
• **YONEYAMA, Akio
Tokyo, 100-8280 (JP)**
• **FUKATANI, Naoto
Tokyo, 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
JP-A- 2006 089 336     JP-B2- 6 101 276
US-A1- 2016 376 712     US-A1- 2021 115 576

**Description**

BACKGROUND OF THE INVENTION

Field of the Invention

The present invention relates to photochemical reaction system and method for photolyzing water to generate hydrogen gas and oxygen gas.

Description of Related Art

As an energy conversion technology utilizing the energy of sunlight, there is a need for practical application of hydrogen and oxygen production technology by means of water decomposition reaction using a photocatalyst. It is necessary to utilize visible light to achieve the practical efficiency of energy conversion, and development of visible light responding type photocatalysis is underway. As a complete water decomposition technology using visible light, a two-step excitation (Z-scheme) method that combines two types of optical semiconductors (hydrogen generation side and oxygen generation side) and a mediator (redox based) has been reported.

Regarding the redox of the Z-scheme type water decomposition by visible light, the following patent literature 1 to 3 is available.

Patent literature 1 has disclosed a technology for separately generating hydrogen and oxygen by giving and receiving electrons between a conductive wire and a redox pair in a two-chamber cell type hydrogen generating cell that is divided by a diaphragm.

Patent literature 2 relates to a Z-scheme type visible light active photocatalyst-based method using the $Fe^{3+}/Fe^{2+}$ redox, and describes that the difference in adsorption amount suppresses the reverse reaction and that it is effective under the pH2.4 acidic condition.

Patent literature 3 describes the complete water decomposition that utilizes visible light usable under the alkaline condition using the iodine compound ($IO_3^-/I^-$) redox.

Patent literature 4 discloses a method for producing hydrogen and oxygen, comprising the steps of: (i) oxidising a mediator at a working electrode to yield an oxidised mediator, and reducing protons at a counter electrode to yield hydrogen; and (ii) reducing an oxidised mediator at a working electrode to yield a mediator, and oxidising water at a counter electrode to yield oxygen, wherein the oxygen generation step is performed non-simultaneously to the hydrogen generation step, and the oxidised mediator of step (i) is used as the oxidised mediator of step (ii), or the mediator of step (ii) is used as the mediator of step (i), and the mediator has a reversible redox wave lying between the onset of the oxygen evolution reaction and the hydrogen evolution reaction.

Patent literature 5 relates to a photochemical reaction device which includes: a solar cell; an electrolytic tank having a first tank storing a first solution including an oxidant and/or reductant of a redox medium and a second tank storing a second solution including water and/or proton; a first electrode set in the first tank, connected to a positive electrode of the solar cell through a first switching element, and connected to a negative electrode of the solar cell through a second switching element; and a second electrode set in the second tank, connected to the positive electrode of the solar cell through a third switching element, and connected to the negative electrode of the solar cell through a fourth switching element.

Citation List

Patent Literature

Patent literature 1: JP-A-2006-89336
Patent literature 2: JP-A-2005-199187
Patent literature 3: JP-A-2002-255502
Patent literature 4: JP 6 101276 B2
Patent literature 5: US 2016/376712 A1 (describing the preamble of claims 1 and 6)

## SUMMARY OF THE INVENTION

### Problems to be Solved by the Invention

In the technology for separately generating hydrogen and oxygen, disclosed in patent literature 1, the hydrogen generating reaction depends on [Red]/[Ox] of the redox pair and the redox pair becomes disproportionate. This will easily cause reverse reaction, thereby inhibiting the efficient hydrogen generating reaction.

As mentioned above, in the Z-scheme type water decomposition by visible light using a redox compound, as the concentration polarization of the initially loaded redox pair increases, reverse reaction progresses, which may cause hydrogen and oxygen generating reaction to stop. However, this problem is not mentioned in both patent literature 2 and patent literature 3.

To solve the above problems of the conventional technologies, the present invention provides a photochemical reaction system and method capable of recovering the efficiency of the hydrogen and oxygen generating reaction without loading additional redox compounds and replacing electrolytic solutions.

### Means for Solving the Problem

The aforementioned object is solved by the invention by a photochemical reaction device and a photochemical method as defined claims 1 and 6 respectively. Further preferred developments are described by the dependent claims.

In particular, it is provided a photochemical reaction system that includes a hydrogen generating cell containing a hydrogen generating type photocatalyst, an aqueous medium including a redox compound, an electrolytic solution, and a first electrode; an oxygen generating cell containing an oxygen generating type photocatalyst, an aqueous medium including a redox compound, an electrolytic solution, and a second electrode; and/or an ion-permeable ion-exchange membrane for separating the hydrogen generating cell and the oxygen generating cell, wherein the photochemical reaction system further includes a redox compound concentration polarization elimination part for eliminating the concentration polarization of the redox compound in the hydrogen generating cell generated as a result of generating hydrogen gas from the hydrogen generating cell by irradiating the hydrogen generating cell with light and the concentration polarization of the redox compound in the oxygen generating cell generated as a result of generating oxygen gas from the oxygen generating cell by irradiating the oxygen generating cell with light. The redox compound concentration polarization elimination part eliminates the above generated concentration polarization of the redox compound by performing temperature difference power generation between the hydrogen generating cell and the oxygen generating cell.

Moreover, it is provided a photochemical reaction method that generates hydrogen gas from a hydrogen generating cell containing a hydrogen generating type photocatalyst, an aqueous medium including a redox compound, and/or an electrolytic solution by irradiating the hydrogen generating cell with light, and generates oxygen gas from an oxygen generating cell containing an oxygen generating type photocatalyst, an aqueous medium including a redox compound, and an electrolytic solution by irradiating the oxygen generating cell with light. In this method, temperature difference is generated between a hydrogen generating cell side first electrode and an oxygen generating cell side second electrode to thereby cause temperature difference power generation to occur between the first electrode and the second electrode. By doing so, eliminating of the concentration polarization of the redox compound generated as a result of generating hydrogen gas from the hydrogen generating cell by irradiating the hydrogen generating cell with light and the concentration polarization of the redox compound generated as a result of generating oxygen gas from the oxygen generating cell by irradiating the oxygen generating cell with light is performed.

### Advantages of the Invention

According to the present invention, the photochemical reaction system for generating hydrogen and oxygen by utilizing visible light is capable of eliminating the concentration polarization of the redox compound that causes reverse reaction, by means of the temperature difference. As a result, it is possible to recover the efficiency of hydrogen and oxygen generating reaction without loading additional redox compounds and replacing electrolytic solutions, thereby increasing the operation rate of the photochemical reaction system.

### Brief Description of the Drawings

Fig. 1 is a block diagram showing the schematic structure of a photochemical reaction system according to example 1 of the present invention.
Fig. 2 is a perspective view showing the structure of the hydrogen and oxygen production part, which is producing hydrogen and oxygen, in the photochemical reaction system according to example 1 of the present invention.

Fig. 3 is a perspective view showing the structure of the hydrogen and oxygen production part, which is performing temperature difference power generation, in the photochemical reaction system according to example 1 of the present invention.

Fig. 4 shows a cross-sectional view of the oxygen generating cell and the hydrogen generating cell presented to explain the state of producing hydrogen and oxygen and the state of performing temperature difference power generation in the photochemical reaction system according to example 1 of the present invention1.

Fig. 5 is a flow chart showing the processing flow of the hydrogen and oxygen production and the temperature difference power generation in the photochemical reaction system according to example 1 of the present invention.

Fig. 6 is a perspective view showing the structure of the hydrogen and oxygen production part, which is producing hydrogen and oxygen, in a photochemical reaction system according to example 2 of the present invention.

Fig. 7 is a perspective view showing the structure of the hydrogen and oxygen production part, which is performing temperature difference power generation, in the photochemical reaction system according to example 2 of the present invention.

Fig. 8 is a perspective view showing the structure of the hydrogen and oxygen production part, which is producing hydrogen and oxygen, in a photochemical reaction system according to example 3 of the present invention.

Detailed Description of the Preferred Embodiments

The present invention relates to a Z-scheme type artificial photosynthesis system and provides a hydrogen generating cell and a hydrogen generating cell control system capable of eliminating the concentration polarization of the redox compound that causes reverse reaction, by means of temperature difference in the hydrogen generating cell for generating hydrogen and oxygen utilizing visible light. As a result, it is possible to increase the efficiency of generating hydrogen and oxygen, thereby increasing the operation rate of the system.

That is, the present invention provides a hydrogen generating cell and a hydrogen generating cell control system that are characterized in that the hydrogen generating cell for generating hydrogen utilizing visible light includes a hydrogen generating type photoelectrode, an oxygen generating type photoelectrode, and an aqueous medium including a redox compound (mediator) that is a redox ion, and that a plurality of paired electrodes for applying temperature difference are disposed in the aqueous medium.

Also, the present invention relates to a photochemical reaction system and method for eliminating the concentration polarization by means of operation control to apply temperature difference during night-time with no sunlight irradiation. As a result, it is possible to recover the efficiency of hydrogen and oxygen generating reaction without loading additional redox compounds or replacing electrolytic solutions, thereby enabling long-term operation.

Furthermore, the present invention relates to a hydrogen generating cell and a hydrogen generating cell control system that are characterized in that a switch for turning ON/OFF the current in a plurality of electrodes and a switching part for switching the switch according to the presence/absence of incident visible light are provided.

Moreover, the present invention provides a method of producing hydrogen and oxygen using a Z-scheme type water decomposition system by visible light that includes a hydrogen generating type photoelectrode, an oxygen generating type photoelectrode, an aqueous medium, and a redox compound functioning as a mediator, wherein temperature difference is applied in a reactor.

The Z-scheme type water decomposition system by visible light has a structure that a pair of conductive electrodes connected by a conductive wire are disposed near the hydrogen generating type photoelectrode and near the oxygen generating type photoelectrode in the reactor so as to apply temperature difference between the paired electrodes in the reactor by applying high temperature to one electrode and low temperature to the other electrode.

Furthermore, the Z-scheme type water decomposition system by visible light is so designed that when the redox compound is an N-type (thermoelectromotive force $\alpha > 0$), high temperature will be applied to the vicinity of the hydrogen generating type photoelectrode and low temperature will be applied to the vicinity of the oxygen generating type photoelectrode so as to apply temperature difference; consequently, the vicinity of the hydrogen generating electrode becomes [Ox]>[Red] and the oxygen generating electrode side becomes [Red]>[Ox], thereby inhibiting the reverse reaction in each photoelectrode.

Furthermore, the Z-scheme type water decomposition system by visible light is characterized in that when the redox compound is a P type (thermoelectromotive force $\alpha < 0$), in case that low temperature will be applied to the vicinity of the hydrogen generating type photoelectrode and high temperature will be applied to the vicinity of the oxygen generating type photoelectrode so as to apply temperature difference; consequently, the vicinity of the hydrogen generating electrode becomes [Ox]>[Red] and the oxygen generating electrode side becomes [Red]>[Ox], thereby inhibiting the reverse reaction in each photoelectrode.

Moreover, the Z-scheme type water decomposition system by visible light is characterized in that the reactor is provided with an ion-selective permeable diaphragm (positive-ion permeation membrane or negative-ion permeation membrane), which allows only ions with an opposite sign of the electrical charge of the redox pair to permeate.

Hereinafter, embodiments of the present invention will be described in detail with reference to the drawings. The same sign is provided for the portion having the same function in the drawings used for describing the embodiments, and repetitive description will be omitted.

The present invention is not limited to the description of the embodiments provided below. Various modifications are possible without departing from the technical concept of the invention as is understood by those skilled in the art.

[Example 1]

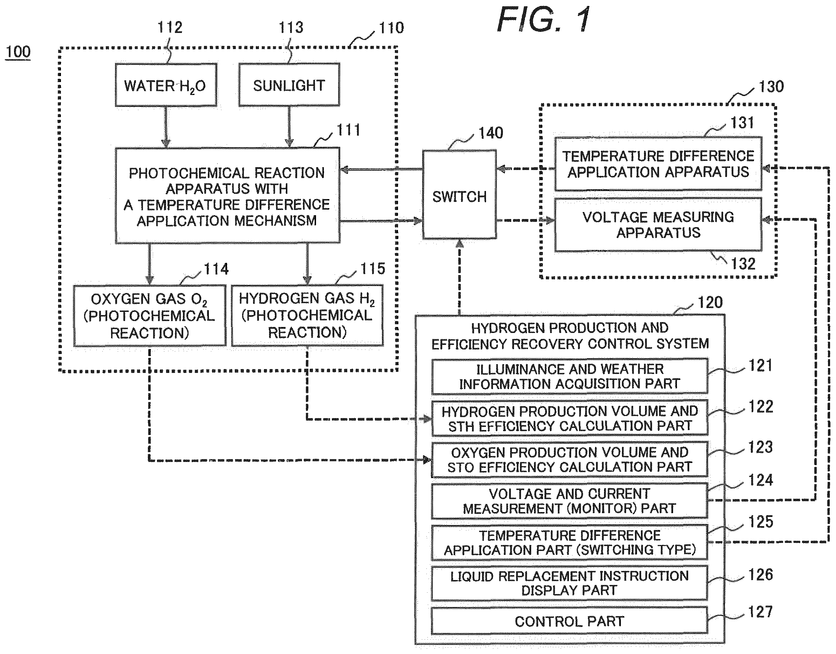

Fig. 1 shows the structure of a photochemical reaction system 100 as an example of the Z-scheme type water decomposition system by visible light according to this example.

The photochemical reaction system 100 according to this example includes a hydrogen and oxygen production part 110 for generating hydrogen and oxygen by photochemical reaction using water as raw material, a hydrogen production and efficiency recovery control system 120 for controlling the production of hydrogen and oxygen in the hydrogen and oxygen production part 110, a temperature difference application mechanism part 130 for controlling the temperature of the hydrogen and oxygen production part 110 so as to eliminate the concentration difference of the redox compound, and a switch 140 for turning ON/OFF the electrical circuit of the hydrogen and oxygen production part 110.

The hydrogen and oxygen production part 110 includes a photochemical reaction apparatus with a temperature difference application mechanism 111, wherein water 112 introduced to the inside of the photochemical reaction apparatus with a temperature difference application mechanism 111 is irradiated with sunlight 113 to generate a photochemical reaction, thereby generating oxygen gas ($O_2$) 114 and hydrogen gas ($H_2$) 115.

The hydrogen production and efficiency recovery control system 120 includes an illuminance and weather information acquisition part 121, a hydrogen production volume and STH efficiency calculation part 122, an oxygen production volume and STO efficiency calculation part 123, a voltage and current measurement (monitor) part 124, a temperature difference application part 125, a liquid replacement instruction display part 126, and a control part 127.

The illuminance and weather information acquisition part 121 acquires information about the illuminance of sunlight 113 entering the photochemical reaction apparatus with a temperature difference application mechanism 111 and about the weather of the area where the photochemical reaction apparatus with a temperature difference application mechanism 111 is installed.

The hydrogen production volume and STH efficiency calculation part 122 acquires information about the volume of hydrogen gas 115 generated by the photochemical reaction apparatus with a temperature difference application mechanism 111, and the oxygen production volume and STO efficiency calculation part 123 acquires information about the volume of oxygen gas 114 generated by the photochemical reaction apparatus with a temperature difference application mechanism 111.

The voltage and current measurement (monitor) part 124 measures the current and voltage flowing between electrodes, described later, of the photochemical reaction apparatus with a temperature difference application mechanism 111. The temperature difference application part 125 heats up or cools down the heat source mounted to the photochemical reaction apparatus with a temperature difference application mechanism 111.

The liquid replacement instruction display part 126 indicates the time for replacing the redox compound supplied to the photochemical reaction apparatus with a temperature difference application mechanism 111, and the control part 127 controls the entire photochemical reaction system 100 including the hydrogen production and efficiency recovery control system 120.

The temperature difference application mechanism part 130 for controlling the temperature of the hydrogen and oxygen production part 110 to eliminate the concentration difference of the redox compound includes a temperature difference application apparatus 131 for applying temperature difference between an oxygen generating cell and a hydrogen generating cell, described later, of the photochemical reaction apparatus with a temperature difference application mechanism 111, and a voltage measuring apparatus 132 for measuring the voltage between electrodes, described later, of the photochemical reaction apparatus with a temperature difference application mechanism 111.

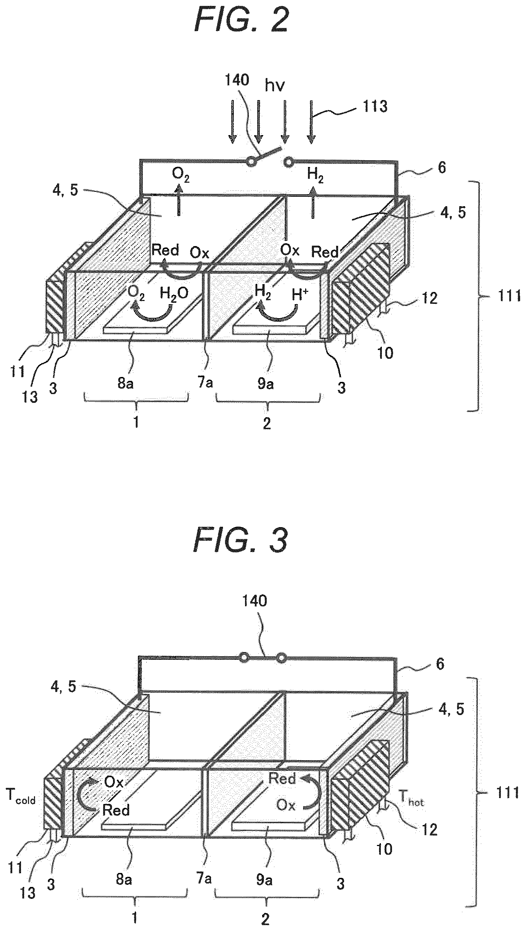

The detailed structure of the photochemical reaction apparatus with a temperature difference application mechanism 111 in the hydrogen and oxygen production part 110 according to this example will be described with reference to Fig. 2 and Fig. 3.

Fig. 2 shows the state of the photochemical reaction apparatus with a temperature difference application mechanism 111 in the daytime, where incident sunlight decomposes water, thereby generating hydrogen and oxygen.

Fig. 3 shows the state of the photochemical reaction apparatus with a temperature difference application mechanism 111 in the night-time, where sunlight is not shining and the concentration polarization of the redox compound is being eliminated.

In the structure shown in Fig. 2 and Fig. 3, 1 denotes an oxygen generating cell, 2 denotes a hydrogen generating cell, 3 denotes an electrode, 4 denotes an electrolytic solution supplied to the inside of the oxygen generating cell 1 and the hydrogen generating cell 2, 5 denotes a redox compound supplied to the inside of the oxygen generating cell 1 and the hydrogen generating cell 2, 7a denotes an ion-selective permeable diaphragm (ion-exchange membrane) formed by a positive-ion-exchange membrane or a negative-ion-exchange membrane, 8a denotes a visible-light responding oxygen generating photocatalyst, and 9a denotes a visible-light responding hydrogen generating photocatalyst.

The ion-selective permeable diaphragm 7a is an ion-exchange membrane that does not allow the redox compound 5 to permeate but allows the counterion to permeate. By using such an ion-selective permeable diaphragm 7a as a diaphragm between the oxygen generating cell 1 and the hydrogen generating cell 2, it is possible to separately generate oxygen and hydrogen in the oxygen generating cell 1 and the hydrogen generating cell 2.

As for the redox compound 5, it is desirable that the redox level be between 0 and +1.23V (vs NHE, pH=0). For example, it is possible to adopt an $Fe^{3+}/Fe^{2+}$ type redox or an $IO_3^-/I^-$ type redox.

Oxygen generated in the oxygen generating cell 1 and hydrogen generated in the hydrogen generating cell 2 are separately recovered by a recovery apparatus, not shown.

A low-temperature-side heat source 11 and a circulating water pipe 13 for circulating cooling water in the low-temperature-side heat source 11 are buried in the area outside the oxygen generating cell 1. Also, a high-temperature-side heat source 10 and a circulating water pipe 12 for circulating hot water in the high-temperature-side heat source 10 are buried in the area outside the hydrogen generating cell 2.

Furthermore, the oxygen generating cell 1 side electrode 3 and the hydrogen generating cell 2 side electrode 3 are connected by a conductive wire 6 connected to a switch 140.

In the above structure, if sunlight 113, denoted by hv, shines while the switch 140 is open as shown in Fig. 2, reduction reaction by the redox compound 5 occurs near the surface of the visible-light responding oxygen generating photocatalyst 8a in the oxygen generating cell 1, thereby generating oxygen $O_2$. As the reduction reaction progresses, concentration of reductants increases in the oxygen generating cell 1.

On the other hand, oxidation reaction by the redox compound 5 occurs near the surface of the visible-light responding hydrogen generating photocatalyst 9a in the hydrogen generating cell 2, thereby generating hydrogen $H_2$. As the oxidation reaction progresses, concentration of oxidants increases near the surface of the visible-light responding hydrogen generating photocatalyst 9a in the hydrogen generating cell 2.

At this time, neither hot water nor cooling water circulates through the circulating water pipes 12 and 13, and both the high-temperature-side heat source 10 and the low-temperature-side heat source 11 are at room temperature.

On the other hand, for example, in the night-time when sunlight 113 is not shining, the switch 140 is closed to electrically connect the oxygen generating cell 1 side electrode 3 and the hydrogen generating cell 2 side electrode 3 as shown in Fig. 3. In this state, the hydrogen generating cell 2 side electrode 3 is heated by circulating hot water in the high-temperature-side heat source 10 through the circulating water pipe 12, and the oxygen generating cell 1 side electrode 3 is cooled by circulating cooling water in the low-temperature-side heat source 11 through the circulating water pipe 13,

By doing so, temperature of the hydrogen generating cell 2 side electrode 3 increases. In this state, reduction reaction occurs in the hydrogen generating cell 2 and the oxidant is converted to the reductant. Accordingly, the redox ratio in the hydrogen generating cell 2 that has been reduced due to the irradiation of the sunlight 113 increases.

On the other hand, temperature of the oxygen generating cell 1 side electrode 3 drops. In this state, oxidation reaction occurs in the oxygen generating cell 1 and the percentage of reductants decreases and the percentage of oxidants increases.

In this state, based on the principle of thermochemical battery, redox pairs permeate the ion-selective permeable diaphragm 7a, causing the temperature difference between the oxygen generating cell 1 side electrode 3 and the hydrogen generating cell 2 side electrode 3, and move around in the electrolytic solution 4 between those electrodes, thereby generating a thermoelectromotive force. Consequently, the switch 140 closes and electric power is continuously generated among the oxygen generating cell 1 and the hydrogen generating cell 2 via the oxygen generating cell 1 side electrode 3 and the hydrogen generating cell 2 side electrode 3 that are electrically connected.

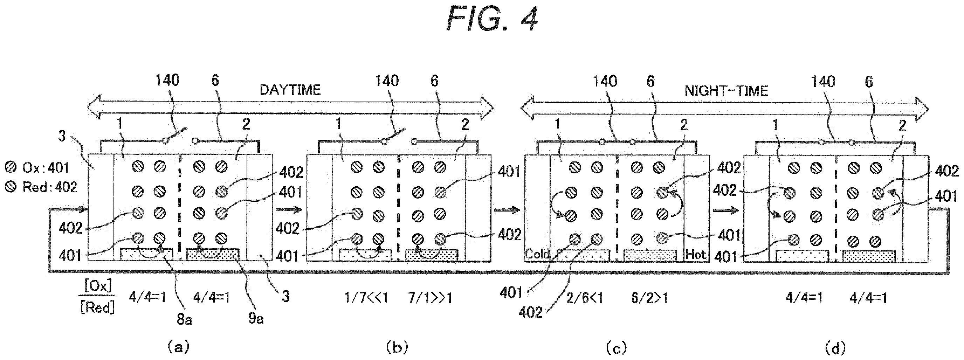

With reference to Fig. 4, an explanation will be given about the generation of oxygen and hydrogen by means of sunlight irradiation and the state of oxidation reaction and reduction reaction caused as a result of heating the hydrogen generating cell 2 side electrode 3 and cooling the oxygen generating cell 1 side electrode 3, which are stated above. Fig. 4(a) and Fig. 4(b) correspond to the state shown in Fig. 2 and show the state with sunlight irradiation. Fig. 4(c) and Fig. 4(d) correspond to the state shown in Fig. 3 and show the state in which the high-temperature-side heat source 10 and the low-temperature-side heat source 11 are operating in the night-time with no sunlight irradiation.

Fig. 4(a) shows the state immediately after the start of sunlight irradiation in the daytime. In this state, the switch 140 is open (OFF). In both the oxygen generating cell 1 and the hydrogen generating cell 2, the ratio of oxidants ([Ox]) 401 to reductants ([Red]) 402 (redox concentration ratio), expressed by [Ox]/[Red], is 1.

Fig. 4(b) shows the state when many hours have passed after irradiation of sunlight started in the daytime. Reduction reaction progresses in the oxygen generating cell 1 to generate oxygen, and the percentage of reductants ([Red]) 402 increases and the percentage of oxidants ([Ox]) 401 decreases near the visible-light responding oxygen generating photocatalyst 8a. At this time, the ratio of oxidants ([Ox]) 401 to reductants ([Red]) 402, expressed by [Ox]/[Red], is sufficiently smaller than 1.

On the other hand, in Fig. 4(b), oxidation reaction progresses in the hydrogen generating cell 2 thereby generating hydrogen, and the percentage of oxidants ([Ox]) 401 increases and the percentage of reductants ([Red]) 402 decreases near the visible-light responding hydrogen generating photocatalyst 9a. At this time, the ratio of oxidants ([Ox]) 401 to reductants ([Red]) 402, expressed by [Ox]/[Red], is sufficiently larger than 1, indicating the progress of polarization of redox concentration.

Fig. 4(c) shows the initial state in the night-time with no sunlight irradiation. In this state, by closing (turning ON) the switch 140, the oxygen generating cell 1 side electrode 3 and the hydrogen generating cell 2 side electrode 3 are electrically connected by a conductive wire 6 as shown in Fig. 3.

Fig. 4(c) shows the state shortly after the high-temperature-side heat source 10 and the low-temperature-side heat source 11 started operating. In this state and according to the present invention, based on the principle of thermochemical battery, redox pairs permeate the ion-selective permeable diaphragm 7a, causing the temperature difference between the oxygen generating cell 1 side electrode 3 and the hydrogen generating cell 2 side electrode 3, and move around in the electrolytic solution 4 between those electrodes, thereby generating a thermoelectromotive force and continuously generating electric power.

Consequently, in the oxygen generating cell 1, the percentage of oxidants ([Ox]) 401 increases and the percentage of reductants ([Red]) 402 decreases near the visible-light responding oxygen generating photocatalyst 8a due to the oxidation reaction when compared with the state shown in Fig. 4(b). As a result, the ratio of oxidants ([Ox]) 401 to reductants ([Red]) 402, expressed by [Ox]/[Red], is smaller than 1 but larger than the value shown in Fig. 4(b).

Furthermore, in Fig. 4(c), in the hydrogen generating cell 2, the percentage of reductants ([Red]) 402 increases and the percentage of oxidants ([Ox]) 401 decreases near the visible-light responding hydrogen generating photocatalyst 9a due to the reduction reaction when compared with the state shown in Fig. 4(b). At this time, the ratio of oxidants ([Ox]) 401 to reductants ([Red]) 402, expressed by [Ox]/[Red], is larger than 1 but smaller than the value shown in Fig. 4(b).

Fig. 4(d) shows the state some time after the state shown in Fig. 4(c) in the night-time. In this state, the oxidation reaction in the oxygen generating cell 1 and the reduction reaction in the hydrogen generating cell 2 have sufficiently progressed, causing the electromotive force to decrease, and the voltage between the oxygen generating cell 1 side electrode 3 and the hydrogen generating cell 2 side electrode 3 becomes almost zero. In this state, in both the oxygen generating cell 1 and the hydrogen generating cell 2, the ratio of oxidants ([Ox]) 401 to reductants ([Red]) 402, expressed by [Ox]/[Red], is 1, which indicates that the polarization of redox concentration has been eliminated.

In this state, the process returns to the state shown in Fig. 4(a), and then the sunlight is applied with the switch 140 open to generate hydrogen and oxygen.

As shown in Fig. 4(a) and Fig. 4(b), for the redox concentration ratio, expressed by [Ox]/[Red], the reductant ([Red]) 402 becomes rich in the oxygen generating cell 1 and the oxidant ([Ox]) 401 becomes rich in the hydrogen generating cell 2 because of the daytime Z-scheme reaction, thereby generating the polarization of redox concentration.

Thus, if the reductant ([Red]) 402 increases in the oxygen generating cell 1 and if the oxidant ([Ox]) 401 increases in the hydrogen generating cell 2, polarization of redox concentration progresses in each cell, causing a reverse reaction to occur. As a result, there is a possibility that the oxygen generation and the hydrogen generation will stop.

In contrast, as described in Fig. 4(c) and Fig. 4(d), in the system according to this example, the heating and cooling means disposed outside the oxygen generating cell 1 and the hydrogen generating cell 2 apply temperature difference between the electrode installed in the oxygen generating cell 1 (visible-light responding oxygen generating photocatalyst 8a) and the electrode installed in the hydrogen generating cell 2 (visible-light responding hydrogen generating photocatalyst 9a) in the night-time when hydrogen gas is not generated due to the reduction of illuminance so that the polarization of redox concentration can be eliminated in each cell. With this, the efficiency of hydrogen generating reaction during the daytime is recovered, thereby enabling the system to be repetitively used.

Herein, when applying temperature difference between electrodes from outside the oxygen generating cell 1 and the hydrogen generating cell 2 so as to eliminate the polarization of redox concentration in each cell, by closing the switch 140 as shown in Fig. 3, to electrically connect the oxygen generating cell 1 side electrode 3 and the hydrogen generating cell 2 side electrode 3, thermoelectromotive force $\alpha$ is generated based on the principle of thermochemical battery. In this state, the voltage (equilibrium potential E) between the oxygen generating cell 1 side electrode 3 and the hydrogen generating cell 2 side electrode 3 is measured by the voltage measuring apparatus 132.

From the Nernst equation, equilibrium potential E is expressed by the redox concentration ratio [Ox]/[Red].

[Equation 1]

$$E = E^0 + \frac{RT}{nF} ln\left(\frac{[Ox]}{Red}\right) \cdots \text{(Equation 1)}$$

[Equation 2]

$$E_{T1} = E_{T1}^0 + \frac{RT}{nF} ln \left(\frac{[0x]_{T1}}{[Red]_{T1}}\right) \cdots \text{(Equation 2)}$$

[Equation 3]

$$E_{T2} = E_{T2}^0 + \frac{RT_2}{nF} ln \left(\frac{[0x]_{T2}}{[Red]_{T2}}\right) \cdots \text{(Equation 3)}$$

[Equation 4]

$$E_{T1} - E_{T2} = (E_{T1}^0 - E_{T2}^0) + \frac{R}{nF}(T_1 - T_2) ln \frac{[0x]_{T1}}{[Red]_{T1}} \frac{[Red]_{T2}}{[0x]_{T2}} \cdots \text{(Equation 4)}$$

[Equation 5]

$$\Delta E = \alpha \Delta T + \frac{R\Delta T}{nF} ln \frac{[0x]_{T1}}{[Red]_{T1}} \frac{[Red]_{T2}}{[0x]_{T2}} \cdots \text{(Equation 5)}$$

[Equation 6]

$$\Delta E = \alpha \Delta T + 2.303 \frac{\Delta T}{n} log \frac{[0x]_{T1}}{[Red]_{T1}} \frac{[Red]_{T2}}{[0x]_{T2}} \cdots \text{(Equation 6)}$$

where

[Ox]: Concentration of oxidant (concentration of oxidized ion)
[Red]: Concentration of reductant (concentration of reduced ion)
1n: Natural logarithm
n: Number of electrons given and received by ions at an electrode
F: Faraday constant
R: Gas constant
T: Absolute temperature
E: Potential for potential measurement
E°: Standard redox potential

The above $\Delta E$ in (Equation 5) and $\Delta E$ in (Equation 6) are equations with the same meaning.

If the voltage measured by the voltage measuring apparatus 132 becomes a constant voltage according to either (Equation 5) or (Equation 6), it is indicated that the concentration difference has been eliminated.

Very little electric power generated by the temperature difference power generation can be used for charging storage battery so as to be used for the bias voltage assist and the power to auxiliary devices.

The sign of the thermoelectromotive force $\alpha$ that varies according to redox species will determine which cell to set at high temperature, the oxygen generating cell 1 or the hydrogen generating cell 2. In the case of type N ($\alpha>0$), in order to inhibit the reverse reaction in the hydrogen generating cell 2 by converting excessive oxidants ([Ox]) 401 to reductants ([Red]) 402 to eliminate the concentration difference and make the concentration ratio close to 1, the hydrogen generating cell 2 is set at a high temperature as described in Fig. 3.

On the other hand, in the case of type P ($\alpha<0$), in order to inhibit the reverse reaction in the oxygen generating cell 1 by converting excessive reductants ([Red]) 402 to oxidants ([Ox]) 401 to eliminate the concentration difference and make the concentration ratio close to 1, the oxygen generating cell 1 is set at a high temperature as opposed to the description provided in Fig. 3.

In (Equation 5) or (Equation 6), temperature difference $\Delta T$ between the oxygen generating cell 1 side electrode 3 and the hydrogen generating cell 2 side electrode 3 is set (input) and $\Delta E$ is measured (output). Since $\alpha$ is an eigenvalue

determined by the redox species, $\alpha\Delta T$ of the right hand first term is determined by temperature difference $\Delta T$. The concentration ratio defines the right hand second term. Whether the concentration ratio is large or small can be judged by whether or not the measured electromotive force $\Delta E$ is no longer different from $\alpha\Delta T$. As the concentration ratio becomes large, $\Delta E$ becomes large, and as the concentration ratio becomes small, $\Delta E$ becomes small.

Herein, each time the redox concentration ratio of the high temperature pole and the low temperature pole changes by 10, the value of electromotive force E changes by approximately 60 mV.

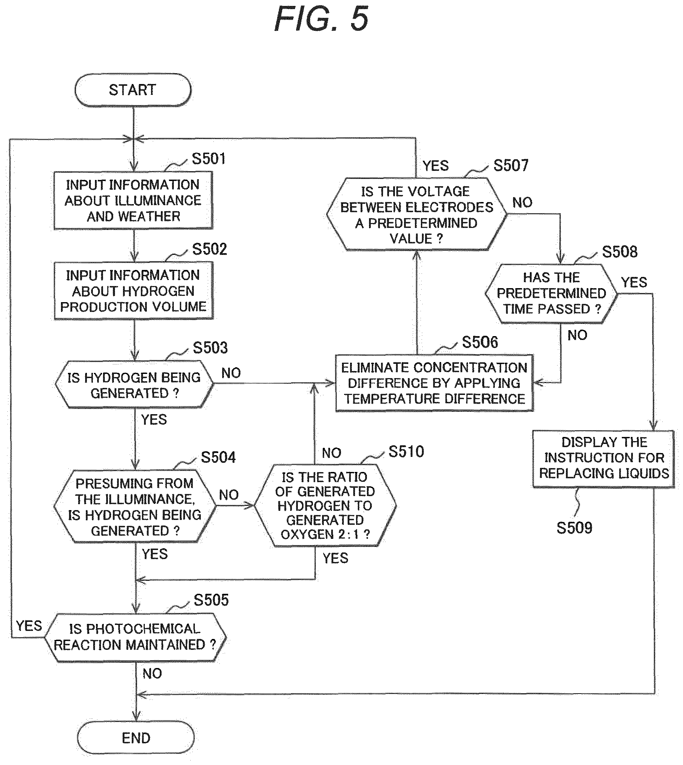

Next, with reference to the flow chart in Fig. 5, description will be given about the procedures for operating the photochemical reaction system 100 provided with a photochemical reaction apparatus with a temperature difference application mechanism 111, as shown in Fig. 2 and Fig. 3.

First, the light entering the photochemical reaction apparatus with a temperature difference application mechanism 111 is measured by means of an illuminance meter, not shown. Then, the information about illuminance and weather that has been stored in the illuminance and weather information acquisition part 121 of the hydrogen production and efficiency recovery control system 120 is input to the control part 127 (S501).

Next, information about the volume of hydrogen produced in the hydrogen and oxygen production part 110 is input into the control part 127 (S502). The volume of hydrogen produced in the hydrogen and oxygen production part 110 was detected by a hydrogen detector, not shown, and has been stored in the hydrogen production volume and STH efficiency calculation part 122.

Subsequently, based on the information about the volume of produced hydrogen input in S502, the control part 127 determines whether hydrogen is being generated from the hydrogen and oxygen production part 110 (S503).

When it is determined that hydrogen is generated from the hydrogen and oxygen production part 110 (Yes in S503), the volume of hydrogen to be generated in the hydrogen and oxygen production part 110 is estimated based on the illuminance information input in S501, and in comparison with the volume of hydrogen produced in the hydrogen and oxygen production part 110 input in S502, it is determined whether the volume of hydrogen estimated from the illuminance is being generated in the hydrogen and oxygen production part 110 (S504).

When it has been determined in S504 that the volume of hydrogen estimated from the illuminance is being generated in the hydrogen and oxygen production part 110 (Yes in S504), it is determined whether to maintain the photochemical reaction (S505). When maintaining the photochemical reaction is determined (Yes in S505), the process will return to S501 and the hydrogen generation process will continue.

On the other hand, when not maintaining the photochemical reaction is determined (No in S505), the process of producing hydrogen will be terminated.

Furthermore, when it is determined in S503 that hydrogen is not being generated in the hydrogen and oxygen production part 110 (No in S503), the control part 127 instructs the switch 140 to close, as described in Fig. 3, to electrically connect the oxygen generating cell 1 side electrode 3 and the hydrogen generating cell 2 side electrode 3. Furthermore, hot water is circulated through the circulating water pipe 12 in the high-temperature-side heat source 10 to heat up the hydrogen generating cell 2, and cooling water is circulated through the circulating water pipe 13 in the low-temperature-side heat source 11 to cool down the oxygen generating cell 1. By doing so, temperature of the hydrogen generating cell 2 side electrode 3 increases and temperature of the oxygen generating cell 1 side electrode 3 decreases.

Consequently, oxidants are converted to reductants by the reduction reaction in the hydrogen generating cell 2, thereby increasing the redox ratio and eliminating the concentration difference between the oxidant and the reductant in the hydrogen generating cell 2. On the other hand, the percentage of reductants decreases and the percentage of oxidants increases due to the oxidation reaction in the oxygen generating cell 1, thereby eliminating the concentration difference between the oxidant and the reductant in the oxygen generating cell 1 (S506).

While hot water is circulated through the circulating water pipe 12 in the high-temperature-side heat source 10 to heat up the hydrogen generating cell 2 and cooling water is circulated through the circulating water pipe 13 in the low-temperature-side heat source 11 to cool down the oxygen generating cell 1, temperature difference power generation is performed between the oxygen generating cell 1 and the hydrogen generating cell 2, and potential difference (voltage) is generated between the oxygen generating cell 1 side electrode 3 and the hydrogen generating cell 2 side electrode 3. Information about the potential difference, measured by the voltage measuring apparatus 132, is stored in the voltage and current measurement (monitor) part 124. $\Delta E$ obtained by the above (Equation 1) through (Equation 5) or (Equation 6) corresponds to the potential difference stored in the voltage and current measurement (monitor) part 124. The control part 127 determines whether the potential difference, expressed by $\Delta E$, between the oxygen generating cell 1 side electrode 3 and the hydrogen generating cell 2 side electrode 3 has reached the predetermined value (S507).

When it has been determined that $\Delta E$ has reached the predetermined value (Yes in S507), the control part 127 instructs the switch 140 to open so as to electrically disconnect the oxygen generating cell 1 side electrode 3 and the hydrogen generating cell 2 side electrode 3, and the process will return to S501.

On the other hand, when it has been determined that $\Delta E$ has not reached the predetermined value (No in S507), it is determined whether the predetermined time has passed after the process proceeded to S506 (S508). When it has been determined that the predetermined time has not passed yet (No in S508), steps S506 and S507 will continue.

On the other hand, when it has been determined that the predetermined time has passed (Yes in S508), the liquid replacement instruction display part 126 of the hydrogen production and efficiency recovery control system 120 prompts the replacement of the electrolytic solution 4 and the redox compound 5 contained in the oxygen generating cell 1 and the hydrogen generating cell 2, and the procedures will be terminated.

Furthermore, when it has been determined in S504 that the volume of hydrogen estimated from the illuminance has not been generated in the hydrogen and oxygen production part 110 (No in S504), based on the information stored in the hydrogen production volume and STH efficiency calculation part 122 about the volume of hydrogen gas 115 produced in the photochemical reaction apparatus with a temperature difference application mechanism 111, and the information stored in the oxygen production volume and STO efficiency calculation part 123 about the volume of oxygen gas 114 produced in the photochemical reaction apparatus with a temperature difference application mechanism 111, it is determined whether the ratio of hydrogen gas 115 to oxygen gas 114, produced in the photochemical reaction apparatus with a temperature difference application mechanism 111, is 2:1.

As a result, when it has been determined that the ratio of hydrogen gas 115 to oxygen gas 114 is 2:1 (Yes in S510), process will proceed to S505, and the photochemical reaction will continue.

On the other hand, when it has been determined that the ratio of hydrogen gas 115 to oxygen gas 114 is not 2:1 (No in S510), the process will proceed to S506 where concentration difference between the oxidant and the reductant in the oxygen generating cell 1 and the hydrogen generating cell 2 is eliminated by increasing the temperature of the hydrogen generating cell 2 side electrode 3 and decreasing the temperature of the oxygen generating cell 1 side electrode 3. Subsequent procedures are the same as those previously explained, and therefore, description will be omitted.

Furthermore, Fig. 2 and Fig. 3 show the example of the structure using the visible-light responding oxygen generating photocatalyst 8a and the visible-light responding hydrogen generating photocatalyst 9a, each formed into a sheet. However, these photocatalysts may be substituted by the visible-light responding oxygen generating photocatalyst particles 8b and the visible-light responding hydrogen generating photocatalyst particles 9b that will be described later in example 2.

Moreover, Fig. 2 and Fig. 3 show the example of the structure in which the oxygen generating cell 1 and the hydrogen generating cell 2 are separated only by the ion-selective permeable diaphragm 7a. However, the structure may be designed so that the oxygen generating cell 1 and the hydrogen generating cell 2 are separated by combining the ion-selective permeable diaphragm 7a and other material so as to reduce the area of the ion-selective permeable diaphragm 7a.

According to this example, the method of producing hydrogen and oxygen by means of water decomposition by sunlight includes means for eliminating the concentration polarization of the redox compound. This makes it possible to prevent the stagnation of water decomposition due to the disproportion of concentration of the redox compound near the electrodes as a result of continuing the water decomposition, thereby allowing the redox compound to be used continuously for comparatively long time without replacing it. Thus, hydrogen and oxygen can be produced repetitively every day by means of the sunlight water-splitting.

[Modifications]

Fig. 2 and Fig. 3 show the structure where the oxygen generating cell 1 and the hydrogen generating cell 2 are separated by the ion-selective permeable diaphragm 7a. However, the oxygen generating cell 1 and the hydrogen generating cell 2 may be separated by a separation barrier using an insulator made of resin etc. without using the ion-selective permeable diaphragm 7a. In this case, instead of adopting the high-temperature-side heat source 10 and the low-temperature-side heat source 11, it is possible to replace half of the liquid in the oxygen generating cell 801 and half of the liquid in the hydrogen generating cell 802 in which concentration polarization of the redox compound has progressed as a result of continuing water-splitting.

[Example 2]

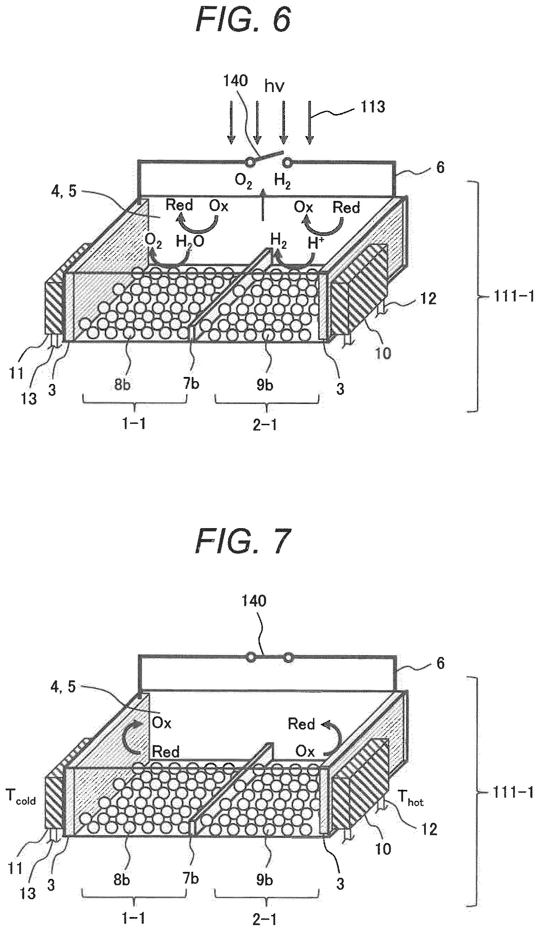

A second example of the present invention will be described with reference to Fig. 6 and Fig. 7. The same number is provided for the same portion as was explained in example 1, and description will be omitted.

The structure of the photochemical reaction apparatus with a temperature difference application mechanism 111-1, shown in Fig. 6 and Fig. 7, corresponds to the photochemical reaction apparatus with a temperature difference application mechanism 111, described in example 1 with reference to Fig. 2 and Fig. 3.

When compared with the structure of the photochemical reaction apparatus with a temperature difference application mechanism 111, explained in example 1 with reference to Fig. 2 and Fig. 3, the photochemical reaction apparatus with a temperature difference application mechanism 111-1, shown in Fig. 6 and Fig. 7, has a different structure where the ion-selective permeable diaphragm 7a is substituted by a divider 7b, the visible-light responding oxygen generating photocatalyst 8a is substituted by visible-light responding oxygen generating photocatalyst particles 8b, and the visible-light responding hydrogen generating photocatalyst 9a is substituted by visible-light responding hydrogen generating photocatalyst particles 9b.

However, as described in example 1, the visible-light responding oxygen generating photocatalyst particles 8b may be substituted by the visible-light responding oxygen generating photocatalyst 8a formed into a sheet, as explained in example 1, and the visible-light responding hydrogen generating photocatalyst particles 9b may also be substituted by the visible-light responding hydrogen generating photocatalyst 9a.

In example 1, the oxygen generating cell 1 and the hydrogen generating cell 2 are completely separated by the ion-selective permeable diaphragm 7a, constituting two chambers. In contrast, in this example, the oxygen generating cell 1-1 and the hydrogen generating cell 2-1 are not completely separated, and these cells substantially constitute one chamber.

In this example, the oxygen generating cell 1-1 and the hydrogen generating cell 2-1 are separated by a divider 7b that is lower than the ion-selective permeable diaphragm 7a in example 1. The divider 7b has the role of dividing the visible-light responding oxygen generating photocatalyst particles 8b in the oxygen generating cell 1-1 and the visible-light responding hydrogen generating photocatalyst particles 9b in the hydrogen generating cell 2-1 so that they do not mix.

Since the divider 7b is low, the upper part of the oxygen generating cell 1-1 and the upper part of the hydrogen generating cell 2-1 are not separated; therefore, an electrolytic solution 4 and a redox compound 5 contained in the oxygen generating cell 1-1 are mixed with an electrolytic solution 4 and a redox compound 5 contained in the hydrogen generating cell 2-1.

In the state shown in Fig. 6, oxygen gas generated in the oxygen generating cell 1-1 and hydrogen gas generated in the hydrogen generating cell 2-1 as a result of irradiation of sunlight 113 are extracted as a mixture. However, by separating the mixed gas by a gas separation means, not shown, for separating a hydrogen gas and an oxygen gas (for example, hydrogen separation membrane), it is possible to separately recover the oxygen gas and the hydrogen gas.

That is, even if the oxygen generating cell 1-1 and the hydrogen generating cell 2-1 are not completely separated and substantially constitute one chamber, as shown in this example, it is possible to generate an oxygen gas and a hydrogen gas and separately recover those gases.

In such a structure, as shown in Fig. 7, according to the same method as explained in example 1 with reference to Fig. 3, in the time zone (night-time) with no sunlight irradiation, temperature of the hydrogen generating cell 2-1 side electrode 3 is increased and temperature of the oxygen generating cell 1-1 side electrode 3 is decreased, thereby performing temperature difference power generation. By doing so, the hydrogen generating cell 2-1 generates the reduction reaction, converting the oxidant to the reductant, and thus the redox ratio in the hydrogen generating cell 2-1 that has been reduced due to the irradiation of sunlight 113 increases. Furthermore, the oxygen generating cell 1-1 generates the oxidation reaction, thereby decreasing the percentage of reductants and increasing the percentage of oxidants, and thus the percentage of oxidants in the oxygen generating cell 1-1 that has been reduced due to the irradiation of sunlight 113 increases.

Operation procedures in this example are the same as those explained in example 1 with reference to Fig. 5, and therefore, description will be omitted.

In this example, in the same manner as example 1, the method of producing hydrogen and oxygen by water decomposition by sunlight includes means for eliminating the concentration polarization of the redox compound, which makes it possible to prevent the stagnation of water decomposition due to the disproportion of concentration of the redox compound near the electrodes as a result of continuing the water decomposition, thereby allowing the redox compound to be used continuously for comparatively long time without replacing it. Thus, hydrogen and oxygen can be produced repetitively every day by means of the water decomposition by sunlight.

[Modifications]

In the above example, description was given about the method of eliminating the concentration polarization of the redox compound by applying temperature difference between the oxygen generating cell 1-1 side electrode 3 and the hydrogen generating cell 2-1 side electrode 3 by using the high-temperature-side heat source 10 and the low-temperature-side heat source 11. However, instead of using the high-temperature-side heat source 10 and the low-temperature-side heat source 11, but by using a screw etc., it is possible to diffuse the liquid in the oxygen generating cell 1-1 and the liquid in the hydrogen generating cell 2-1 in which concentration polarization of the redox compound has progressed as a result of continuing water splitting.

[Example 3]

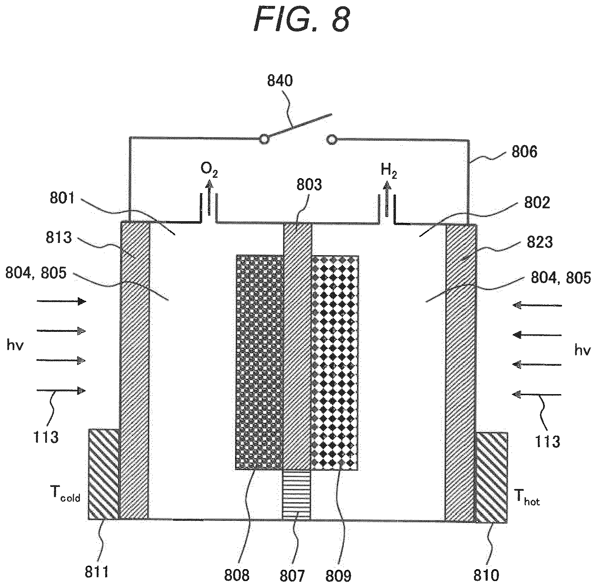

A third example of the present invention will be described with reference to Fig. 8.

The structure, shown in Fig. 8, corresponds to the photochemical reaction apparatus with a temperature difference application mechanism 111, explained in example 1 with reference to Fig. 2. Differences from the structure shown example 1 are the arrangement of the visible-light responding oxygen generating photocatalyst and the visible-light responding hydrogen generating photocatalyst, and the incident direction of the sunlight entering the oxygen generating cell and the hydrogen generating cell. The electrolytic solution and the redox compound used are the same as those used in example 1.

In the structure shown in Fig. 8, 801 denotes an oxygen generating cell, 802 denotes a hydrogen generating cell, 803 denotes a separation barrier, 804 denotes an electrolytic solution supplied to the inside of the oxygen generating cell 801 and the hydrogen generating cell 802, 805 denotes a redox compound supplied to the inside of the oxygen generating cell 801 and the hydrogen generating cell 802, 807 denotes an ion-selective permeable diaphragm formed by a positive-ion-exchange membrane or a negative-ion-exchange membrane, 808 denotes a visible-light responding oxygen generating photocatalyst, and 809 denotes a visible-light responding hydrogen generating photocatalyst.

810 denotes a high-temperature-side heat source in which a circulating water pipe (not shown) for circulating hot water is buried. 811 denotes a low-temperature-side heat source in which a circulating water pipe (not shown) for circulating cooling water is buried.

813 denotes an oxygen generating cell side electrode made of transparent conductive material. 814 denotes a hydrogen generating cell side electrode made of transparent conductive material. 840 denotes a switch, and 806 denotes an electric wire that connects the oxygen generating cell side electrode 813 and the hydrogen generating cell side electrode 814 via the switch 840.

The ion-selective permeable diaphragm 807 is an ion-exchange membrane which does not allow the redox compound 805 to permeate but allows the counterion to permeate.

Thus, by separating the oxygen generating cell 801 and the hydrogen generating cell 802 by means of the separation barrier 803 and the ion-selective permeable diaphragm 807, in the same manner as example 1, it is possible to separately generate oxygen gas and hydrogen gas in the oxygen generating cell 801 and the hydrogen generating cell 802.

The oxygen gas generated in the oxygen generating cell 801 and the hydrogen gas generated in the hydrogen generating cell 802 are separately recovered by a recovery apparatus, not shown.

In such a structure, as shown in Fig. 8, while the switch 840 is open, by irradiating the inside of the oxygen generating cell 801 through the transparent oxygen generating cell side electrode 813 from both sides with the sunlight 113, denoted by hv, reduction reaction occurs due to the redox compound 805 near the surface of the visible-light responding oxygen generating photocatalyst 808 in the oxygen generating cell 801, thereby generating oxygen $O_2$. As the reduction reaction progresses, concentration of reductants in the oxygen generating cell 801 increases.

On the other hand, by irradiating the inside of hydrogen generating cell 802 through the transparent hydrogen generating cell side electrode 814 with the sunlight 113, denoted by hv, oxidation reaction occurs due to the redox compound 5 near the surface of the visible-light responding hydrogen generating photocatalyst 809 in the hydrogen generating cell 802, thereby generating hydrogen $H_2$. As the oxidation reaction progresses, concentration of oxidants near the surface of the visible-light responding hydrogen generating photocatalyst 809 in the hydrogen generating cell 802 increases.

At this time, the high-temperature-side heat source 810 and the low-temperature-side heat source 811 are at room temperature.

On the other hand, for example, in the night-time etc. with no irradiation of the sunlight 113, in the same manner as explained in example 1 with reference to Fig. 3, the switch 840 is closed to electrically connect the oxygen generating cell side electrode 813 and the hydrogen generating cell side electrode 823, and the hydrogen generating cell 802 is heated by circulating hot water in the high-temperature-side heat source 810, and the oxygen generating cell 801 is cooled by circulating cooling water in the low-temperature-side heat source 811.

As a result, temperature of the hydrogen generating cell side electrode 823 in the hydrogen generating cell 802 increases, and temperature of the oxygen generating cell side electrode 813 in the oxygen generating cell 801 decreases. In this state, reduction reaction occurs in the hydrogen generating cell 802, converting the oxidant to the reductant. By doing so, the percentage of the redox compound in the hydrogen generating cell 802 that has been reduced as a result of the irradiation of the sunlight 113 increases. As a result, the oxidant and the reductant are present in almost equal proportion in the hydrogen generating cell 802,

On the other hand, oxidation reaction occurs in the oxygen generating cell 801, the percentage of reductants decreases and the percentage of oxidants increases. Consequently, the percentage of the redox compound in the hydrogen generating cell 802 that has been reduced as a result of the irradiation of the sunlight 113 increases. As a result, the oxidant and the reductant are present in almost equal proportion in the hydrogen generating cell 802.

In this example, in the same manner as example 1, the method of producing hydrogen and oxygen by water decomposition by sunlight includes means for eliminating the concentration polarization of the redox compound, which makes it possible to prevent the stagnation of water-splitting due to the disproportion of concentration of the redox compound near the electrodes as a result of continuing the water decomposition, thereby allowing the redox compound to be used continuously for comparatively long time without replacing it. Thus, hydrogen and oxygen can be produced repetitively every day by means of the water decomposition by sunlight.

[Modifications]

Fig. 8 shows the structure designed such that the oxygen generating cell 801 and the hydrogen generating cell 802 are separated by the separation barrier 803 and the ion-selective permeable diaphragm 807. However, the oxygen generating cell 801 and the hydrogen generating cell 802 may be separated only by the separation barrier 803 without using the ion-selective permeable diaphragm 807. By doing so, it is possible to replace half of the liquid in the oxygen generating cell 801 and half of the liquid in the hydrogen generating cell 802 in which concentration polarization of the redox compound has progressed as a result of continuing water decomposition.

Reference Signs List

1, 801 Oxygen generating cell
2, 802 Hydrogen generating cell
3 Electrode
4, 804 Electrolytic solution
5, 805 Redox compound
6, 806 Conductive wire
7a, 807 Ion-selective permeable diaphragm
7b Divider
8a, 808 Visible-light responding oxygen generating photocatalyst
8b Visible-light responding oxygen generating photocatalyst particle
9a, 809 Visible-light responding hydrogen generating photocatalyst
9b Visible-light responding hydrogen generating photocatalyst particle
10, 810 High-temperature-side heat source
11, 811 Low-temperature-side heat source
100 Photochemical reaction system
110 Hydrogen and oxygen production part
111 Photochemical reaction apparatus with a temperature difference application mechanism
120 Hydrogen production and efficiency recovery control system
121 Illuminance and weather information acquisition part
122 Hydrogen production volume and STH efficiency calculation part
123 Oxygen production volume and STO efficiency calculation part
124 Voltage and current measurement (monitor) part
125 Temperature difference application part
126 Liquid replacement instruction display part
127 Control part
130 Temperature difference application mechanism part
131 Temperature difference application apparatus
132 Voltage measuring apparatus
140 Switch
813 Oxygen generating cell-side electrode
823 Hydrogen generating cell-side electrode

**Claims**

1. A photochemical reaction system (100), comprising:

   a hydrogen generating cell (2, 802) containing a hydrogen generating type photocatalyst, an aqueous medium including a redox compound (5, 805), and an electrolytic solution (4);
   the photochemical reaction system being **characterised by**:
   an oxygen generating cell (1, 801) containing an oxygen generating type photocatalyst, an aqueous medium including a redox compound (5, 805), and an electrolytic solution (4); wherein
   said hydrogen generating cell (2, 802) and said oxygen generating cell (1, 801) are separated by an ion-exchange membrane (7a);
a first electrode (3) contained in said hydrogen generating cell (1, 802);
a second electrode (3) contained in said oxygen generating cell (1, 801);
a temperature difference application part (125) configured to generate a temperature difference between said hydrogen generating cell (2, 802) and said oxygen generating cell (1, 801)to cause the redox compound (5, 805) permeating the ion-exchange membrane (7a) and moving around in the electrolytic solution (4) between the first electrode (3) and the second electrode (3) thereby generating a thermoelectromotive force and continuously generating electric power for eliminating the concentration polarization of said redox compound (5, 805) generated as a result of generating a hydrogen gas (115) from said hydrogen generating cell (2, 802) by irradiating said hydrogen generating cell (2, 802) with light and the concentration polarization of said redox compound (5, 805) generated as a result of generating an oxygen gas (114) from said oxygen generating cell (1, 801) by irradiating said oxygen generating cell (1, 801) with light.

2. The photochemical reaction system (100) according to claim 1, further comprising:

a switch (140) configured to turn ON/OFF the electrical connection between said first electrode (3) and said second electrode (3);
a voltage measuring apparatus (132) configured to detect a voltage between said first electrode (3) and said second electrode (3) when the electrodes (3) are electrically connected by closing said switch (140) while temperature difference is generated between said first electrode (3) and said second electrode (3) by said temperature difference application part (125), and
a voltage and current measurement part (124) configured to monitor the concentration polarization elimination state of said redox compound (5, 805) based on said detected voltage.

3. The photochemical reaction system according to claim 2, further comprising:
a control part (127) configured to turn OFF said switch (140) so as to electrically disconnect said first electrode (3) and said second electrode (3) when said voltage detected by the voltage measuring apparatus (132) has reached a predetermined value.

4. The photochemical reaction system (100) according to claim 3, wherein said control part (127) comprises a liquid replacement instruction display part (126); said liquid replacement instruction display part (126) configured to display an instruction for a replacement of liquid when said voltage detected by the voltage measuring apparatus (132) does not decrease to a predetermined value within a predetermined time.

5. The photochemical reaction system according to claim 1, wherein said temperature difference application part (125) comprises a heating part (10, 810) for increasing temperature of said first electrode (3) and a cooling part (11, 811) for decreasing temperature of said second electrode (3).

6. A photochemical reaction method, comprising:

generating a hydrogen gas (115) from a hydrogen generating cell (2, 802) containing a hydrogen generating type photocatalyst, an aqueous medium including a redox compound (5, 805), and an electrolytic solution (4) by irradiating said hydrogen generating cell (2, 802) with light;
the photochemical reaction method being **characterised by**:
generating an oxygen gas (114) from an oxygen generating cell (1, 801) containing an oxygen generating type photocatalyst, an aqueous medium including a redox compound (5, 805), and an electrolytic solution (4) by irradiating said oxygen generating cell (1, 801) with light; wherein said hydrogen generating cell (2, 802) and said oxygen generating cell (1, 801) are separated by an ion-exchange membrane (7a);
wherein a temperature difference is generated between a first electrode (10) in said hydrogen generating cell (2, 802) and a second electrode (11) in said oxygen generating cell (1, 801), to cause the redox compound (5, 805) permeating the ion-exchange membrane (7a) and moving around in the electrolytic solution (4) between the first electrode (10) and the second electrode (11) thereby generating a thermoelectromotive force and continuously generating electric power,
thereby eliminating the concentration polarization of said redox compound (5, 805) generated as a result of generating a hydrogen gas (115) from said hydrogen generating cell (2, 802) by irradiating said hydrogen generating cell (2, 802) with light and the concentration polarization of said redox compound (5, 805) generated as a result of generating an oxygen gas (114) from said oxygen generating cell (1, 801) by irradiating said oxygen generating cell (1, 801) with light.

7. The photochemical reaction method according to claim 6, wherein a voltage between said first electrode (3) and said second electrode (3) is detected while temperature difference is generated between said first electrode (3) and said second electrode (3), and based on said detected voltage, elimination of the concentration polarization of said redox compound (5, 805) is monitored.

8. The photochemical reaction method according to claim 6, wherein a voltage between said first electrode (3) and said second electrode (3) is detected while temperature difference is generated between said first electrode (3) and said second electrode (3), and when said detected voltage does not decrease to a predetermined value within predetermined time, replacement of the aqueous medium including said redox compound (5, 805) and said electrolytic solution (4) contained in said hydrogen generating cell (2, 802) and the aqueous medium including said redox compound (5, 805) and said electrolytic solution (4) contained in said oxygen generating cell (1, 801) is prompted.

**Patentansprüche**

1. Photochemisches Reaktionssystem (100), umfassend:
eine Wasserstoff erzeugende Zelle (2, 802), die einen Wasserstoff erzeugenden Photokatalysator, ein wässriges Medium, das eine Redoxverbindung (5, 805) enthält, und eine Elektrolytlösung (4) enthält; wobei das photochemische Reaktionssystem **gekennzeichnet ist durch**:

eine Sauerstoff erzeugende Zelle (1, 801), die einen Sauerstoff erzeugenden Photokatalysator, ein wässriges Medium, das eine Redoxverbindung (5, 805) enthält, und eine Elektrolytlösung (4) enthält; wobei die Wasserstoff erzeugende Zelle (2, 802) und die Sauerstoff erzeugende Zelle (1, 801) **durch** eine Ionenaustauschmembran (7a) getrennt sind;
eine erste Elektrode (3), die in der Wasserstoff erzeugenden Zelle (1, 802) enthalten ist;
eine zweite Elektrode (3), die in der Sauerstoff erzeugenden Zelle (1, 801) enthalten ist;
einen Temperaturdifferenzanwendungsteil (125), der konfiguriert ist, um eine Temperaturdifferenz zwischen der Wasserstoff erzeugenden Zelle (2, 802) und der Sauerstoff erzeugenden Zelle (1, 801) zu erzeugen, um zu bewirken, dass die Redoxverbindung (5, 805) die Ionenaustauschmembran (7a) durchdringt und sich in der Elektrolytlösung (4) zwischen der ersten Elektrode (3) und der zweiten Elektrode (3) herumbewegt, wodurch eine thermoelektromotorische Kraft erzeugt wird und kontinuierlich elektrische Leistung erzeugt wird, um die Konzentrationspolarisation der Redoxverbindung (5, 805), die als Ergebnis der Erzeugung eines Wasserstoffgases (115) aus der Wasserstoff erzeugenden Zelle (2, 802) durch Bestrahlen der Wasserstoff erzeugenden Zelle (2, 802) mit Licht erzeugt wird, und die Konzentrationspolarisation der Redoxverbindung (5, 805), die als Ergebnis der Erzeugung eines Sauerstoffgases (114) aus der Sauerstoff erzeugenden Zelle (1, 801) **durch** Bestrahlen der Sauerstoff erzeugenden Zelle (1, 801) mit Licht erzeugt wird, zu eliminieren.

2. Photochemisches Reaktionssystem (100) nach Anspruch 1, ferner umfassend:

einen Schalter (140), der konfiguriert ist, um die elektrische Verbindung zwischen der ersten Elektrode (3) und der zweiten Elektrode (3) EIN/AUS zu schalten;
eine Spannungsmessvorrichtung (132), die konfiguriert ist, um eine Spannung zwischen der ersten Elektrode (3) und der zweiten Elektrode (3) zu erfassen, wenn die Elektroden (3) elektrisch verbunden sind, indem der Schalter (140) geschlossen wird, während eine Temperaturdifferenz zwischen der ersten Elektrode (3) und der zweiten Elektrode (3) durch den Temperaturdifferenzanwendungsteil (125) erzeugt wird, und
einen Spannungs- und Strommessteil (124), der konfiguriert ist, um den Konzentrationspolarisationseliminierungszustand der Redoxverbindung (5, 805) basierend auf der erfassten Spannung zu überwachen.

3. Photochemisches Reaktionssystem nach Anspruch 2, ferner umfassend:
einen Steuerteil (127), der konfiguriert ist, um den Schalter (140) AUS zu schalten, um die erste Elektrode (3) und die zweite Elektrode (3) elektrisch zu trennen, wenn die durch die Spannungsmessvorrichtung (132) erfasste Spannung einen vorbestimmten Wert erreicht hat.

4. Photochemisches Reaktionssystem (100) nach Anspruch 3, wobei der Steuerteil (127) einen Flüssigkeitsaustauschanweisungsanzeigeteil (126) umfasst; wobei der Flüssigkeitsaustauschanweisungsanzeigeteil (126) konfiguriert ist, um eine Anweisung für einen Austausch von Flüssigkeit anzuzeigen, wenn die durch die Spannungsmessvorrichtung (132) erfasste Spannung nicht innerhalb einer vorbestimmten Zeit auf einen vorbestimmten Wert abnimmt.

**5.** Photochemisches Reaktionssystem nach Anspruch 1, wobei der Temperaturdifferenzanwendungsteil (125) einen Heizteil (10, 810) zum Erhöhen der Temperatur der ersten Elektrode (3) und einen Kühlteil (11, 811) zum Verringern der Temperatur der zweiten Elektrode (3) umfasst.

**6.** Photochemisches Reaktionsverfahren, umfassend:
Erzeugen eines Wasserstoffgases (115) aus einer Wasserstoff erzeugenden Zelle (2, 802), die einen Wasserstoff erzeugenden Photokatalysator, ein wässriges Medium, das eine Redoxverbindung (5, 805) enthält, und eine Elektrolytlösung (4) enthält, durch Bestrahlen der Wasserstoff erzeugenden Zelle (2, 802) mit Licht; wobei das photochemische Reaktionsverfahren **gekennzeichnet ist durch**:

Erzeugen eines Sauerstoffgases (114) aus einer Sauerstoff erzeugenden Zelle (1, 801), die einen Sauerstoff erzeugenden Photokatalysator, ein wässriges Medium, das eine Redoxverbindung (5, 805) enthält, und eine Elektrolytlösung (4) enthält, **durch** Bestrahlen der Sauerstoff erzeugenden Zelle (1, 801) mit Licht; wobei die Wasserstoff erzeugende Zelle (2, 802) und die Sauerstoff erzeugende Zelle (1, 801) **durch** eine Ionenaustauschmembran (7a) getrennt sind;
wobei eine Temperaturdifferenz zwischen einer ersten Elektrode (10) in der Wasserstoff erzeugenden Zelle (2, 802) und einer zweiten Elektrode (11) in der Sauerstoff erzeugenden Zelle (1, 801) erzeugt wird, um zu bewirken, dass die Redoxverbindung (5, 805) die Ionenaustauschmembran (7a) durchdringt und sich in der Elektrolytlösung (4) zwischen der ersten Elektrode (10) und der zweiten Elektrode (11) herumbewegt, wodurch eine thermoelektromotorische Kraft erzeugt wird und kontinuierlich elektrische Leistung erzeugt wird, wodurch die Konzentrationspolarisation der Redoxverbindung (5, 805), die als Ergebnis der Erzeugung eines Wasserstoffgases (115) aus der Wasserstoff erzeugenden Zelle (2, 802) **durch** Bestrahlen der Wasserstoff erzeugenden Zelle (2, 802) mit Licht erzeugt wird, und die Konzentrationspolarisation der Redoxverbindung (5, 805), die als Ergebnis der Erzeugung eines Sauerstoffgases (114) aus der Sauerstoff erzeugenden Zelle (1, 801) **durch** Bestrahlen der Sauerstoff erzeugenden Zelle (1, 801) mit Licht erzeugt wird, eliminiert wird.

**7.** Photochemisches Reaktionsverfahren nach Anspruch 6, wobei eine Spannung zwischen der ersten Elektrode (3) und der zweiten Elektrode (3) erfasst wird, während eine Temperaturdifferenz zwischen der ersten Elektrode (3) und der zweiten Elektrode (3) erzeugt wird, und basierend auf der erfassten Spannung die Eliminierung der Konzentrationspolarisation der Redoxverbindung (5, 805) überwacht wird.

**8.** Photochemisches Reaktionsverfahren nach Anspruch 6, wobei eine Spannung zwischen der ersten Elektrode (3) und der zweiten Elektrode (3) erfasst wird, während eine Temperaturdifferenz zwischen der ersten Elektrode (3) und der zweiten Elektrode (3) erzeugt wird, und wenn die erfasste Spannung nicht innerhalb einer vorbestimmten Zeit auf einen vorbestimmten Wert abnimmt, der Austausch des wässrigen Mediums, das die Redoxverbindung (5, 805) und die Elektrolytlösung (4) enthält, die in der Wasserstoff erzeugenden Zelle (2, 802) enthalten ist, und des wässrigen Mediums, das die Redoxverbindung (5, 805) und die Elektrolytlösung (4) enthält, die in der Sauerstoff erzeugenden Zelle (1, 801) enthalten ist, veranlasst wird.

**Revendications**

**1.** Système de réaction photochimique (100), comprenant :
une cellule de génération d'hydrogène (2, 802) contenant un photocatalyseur de type à génération d'hydrogène, un milieu aqueux incluant un composé redox (5, 805), et une solution électrolytique (4) ; le système de réaction photochimique étant **caractérisé par** :

une cellule de génération d'oxygène (1, 801) contenant un photocatalyseur de type à génération d'oxygène, un milieu aqueux incluant un composé redox (5, 805), et une solution électrolytique (4) ; dans lequel
ladite cellule de génération d'hydrogène (2, 802) et ladite cellule de génération d'oxygène (1, 801) sont séparées par une membrane échangeuse d'ions (7a) ;
une première électrode (3) contenue dans ladite cellule de génération d'hydrogène (1, 802) ;
une seconde électrode (3) contenue dans ladite cellule de génération d'oxygène (1, 801) ;
une partie d'application de différence de température (125) configurée pour générer une différence de température entre ladite cellule de génération d'hydrogène (2, 802) et ladite cellule de génération d'oxygène (1, 801) pour amener le composé redox (5, 805) à pénétrer dans la membrane échangeuse d'ions (7a) et à se déplacer autour dans la solution électrolytique (4) entre la première électrode (3) et la seconde électrode (3), générant ainsi une force thermoélectromotrice et générant en continu de l'énergie électrique pour éliminer la polarisation de concentration dudit composé redox (5, 805) générée à la suite de la génération d'un hydrogène gazeux (115) à partir de ladite cellule de génération d'hydrogène (2, 802) en irradiant ladite cellule de génération d'hydrogène (2, 802) avec de la lumière et la polarisation de concentration dudit composé redox (5, 805) générée à la suite de la génération d'un oxygène gazeux (114) à partir de ladite cellule de génération d'oxygène (1, 801) en irradiant ladite cellule de génération d'oxygène (1, 801) avec de la lumière.

2. Système de réaction photochimique (100) selon la revendication 1, comprenant en outre :

un commutateur (140) configuré pour activer/désactiver la connexion électrique entre ladite première électrode (3) et ladite seconde électrode (3) ;

un appareil de mesure de tension (132) configuré pour détecter une tension entre ladite première électrode (3) et ladite seconde électrode (3) lorsque les électrodes (3) sont électriquement connectées en fermant ledit commutateur (140) alors qu'une différence de température est générée entre ladite première électrode (3) et ladite seconde électrode (3) par ladite partie d'application de différence de température (125), et

une partie de mesure de tension et de courant (124) configurée pour surveiller l'état d'élimination de polarisation de concentration dudit composé redox (5, 805) sur la base de ladite tension détectée.

3. Système de réaction photochimique selon la revendication 2, comprenant en outre :
une partie de commande (127) configurée pour désactiver ledit commutateur (140) de manière à déconnecter électriquement ladite première électrode (3) et ladite seconde électrode (3) lorsque ladite tension détectée par l'appareil de mesure de tension (132) a atteint une valeur prédéterminée.

4. Système de réaction photochimique (100) selon la revendication 3, dans lequel ladite partie de commande (127) comprend une partie d'affichage d'instruction de remplacement de liquide (126) ; ladite partie d'affichage d'instruction de remplacement de liquide (126) étant configurée pour afficher une instruction pour un remplacement de liquide lorsque ladite tension détectée par l'appareil de mesure de tension (132) ne diminue pas jusqu'à une valeur prédéterminée dans un temps prédéterminé.

5. Système de réaction photochimique selon la revendication 1, dans lequel ladite partie d'application de différence de température (125) comprend une partie de chauffage (10, 810) pour augmenter la température de ladite première électrode (3) et une partie de refroidissement (11, 811) pour diminuer la température de ladite seconde électrode (3).

6. Procédé de réaction photochimique, comprenant :
la génération d'un hydrogène gazeux (115) à partir d'une cellule de génération d'hydrogène (2, 802) contenant un photocatalyseur de type à génération d'hydrogène, un milieu aqueux incluant un composé redox (5, 805), et une solution électrolytique (4) en irradiant ladite cellule de génération d'hydrogène (2, 802) avec de la lumière ; le procédé de réaction photochimique étant **caractérisé par** :

la génération d'un oxygène gazeux (114) à partir d'une cellule de génération d'oxygène (1, 801) contenant un photocatalyseur de type à génération d'oxygène, un milieu aqueux incluant un composé redox (5, 805), et une solution électrolytique (4) en irradiant ladite cellule de génération d'oxygène (1, 801) avec de la lumière ; dans lequel ladite cellule de génération d'hydrogène (2, 802) et ladite cellule de génération d'oxygène (1, 801) sont séparées par une membrane échangeuse d'ions (7a) ;

dans lequel une différence de température est générée entre une première électrode (10) dans ladite cellule de génération d'hydrogène (2, 802) et une seconde électrode (11) dans ladite cellule de génération d'oxygène (1, 801), pour amener le composé redox (5, 805) à pénétrer dans la membrane échangeuse d'ions (7a) et à se déplacer autour dans la solution électrolytique (4) entre la première électrode (10) et la seconde électrode (11), générant ainsi une force thermoélectromotrice et générant en continu de l'énergie électrique,

éliminant ainsi la polarisation de concentration dudit composé redox (5, 805) générée à la suite de la génération d'un hydrogène gazeux (115) à partir de ladite cellule de génération d'hydrogène (2, 802) en irradiant ladite cellule de génération d'hydrogène (2, 802) avec de la lumière et la polarisation de concentration dudit composé redox (5, 805) générée à la suite de la génération d'un oxygène gazeux (114) à partir de ladite cellule de génération d'oxygène (1, 801) en irradiant ladite cellule de génération d'oxygène (1, 801) avec de la lumière.

7. Procédé de réaction photochimique selon la revendication 6, dans lequel une tension entre ladite première électrode (3) et ladite seconde électrode (3) est détectée alors qu'une différence de température est générée entre ladite première électrode (3) et ladite seconde électrode (3), et sur la base de ladite tension détectée, l'élimination de la polarisation de concentration dudit composé redox (5, 805) est surveillée.

8. Procédé de réaction photochimique selon la revendication 6, dans lequel une tension entre ladite première électrode (3) et ladite seconde électrode (3) est détectée alors qu'une différence de température est générée entre ladite première électrode (3) et ladite seconde électrode (3), et lorsque ladite tension détectée ne diminue pas jusqu'à une valeur prédéterminée dans un temps prédéterminé, le remplacement du milieu aqueux incluant ledit composé redox (5, 805) et ladite solution électrolytique (4) contenus dans ladite cellule de génération d'hydrogène (2, 802) et du milieu aqueux incluant ledit composé redox (5, 805) et ladite solution électrolytique (4) contenus dans ladite cellule de génération d'oxygène (1, 801) est provoqué.

## FIG. 1

## FIG. 2

## FIG. 3

# FIG. 4

# FIG. 5

START

S501
INPUT INFORMATION ABOUT ILLUMINANCE AND WEATHER

S502
INPUT INFORMATION ABOUT HYDROGEN PRODUCTION VOLUME

S503
IS HYDROGEN BEING GENERATED ? — NO

YES

S504
PRESUMING FROM THE ILLUMINANCE, IS HYDROGEN BEING GENERATED ? — NO

YES

S510
IS THE RATIO OF GENERATED HYDROGEN TO GENERATED OXYGEN 2:1 ? — NO

YES

S506
ELIMINATE CONCENTRATION DIFFERENCE BY APPLYING TEMPERATURE DIFFERENCE

S507
YES — IS THE VOLTAGE BETWEEN ELECTRODES A PREDETERMINED VALUE ? — NO

S508
HAS THE PREDETERMINED TIME PASSED ? — YES

NO

S509
DISPLAY THE INSTRUCTION FOR REPLACING LIQUIDS

S505
YES — IS PHOTOCHEMICAL REACTION MAINTAINED ?

NO

END

# FIG. 6

# FIG. 7

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006089336 A
- JP 2005199187 A
- JP 2002255502 A
- JP 6101276 B
- US 2016376712 A1